# EUROPEAN PATENT SPECIFICATION

(11) **EP 4 265 314 B1**
(45) Date of publication and mention of the grant of the patent: **12.11.2025**
(21) Application number: 23169322.7
(22) Date of filing: 21.04.2023
(51) Int. Cl.: B01D 29/11, B01D 29/17, B01D 29/88, B01D 29/92, B01D 35/02

(54) **WATER FILTER/SCREEN**
WASSERFILTER/SIEB
FILTRE/TAMIS À EAU

(30) Priority: 22.04.2022 AU 2022901063
(43) Date of publication of application: 25.10.2023
(73) Proprietor: Dama Manufacturing Limited, 0112 Whangarei (NZ)
(72) Inventor: van den Bosch, Matthew, 0112 Whangarei (NZ)
(74) Representative: Swindell & Pearson Limited

(56) References cited:
- EP-B1- 3 661 621
- GB-A- 1 520 003
- US-A- 4 904 384
- US-A- 5 916 443
- US-A1- 2004 129 629

## Description

### 1. FIELD OF INVENTION

The present invention relates to filters and screens, in particular, but not exclusively, to filters and screens for use with systems which abstract water from lakes, rivers or ponds.

### 2. BACKGROUND TO THE INVENTION

Screens or filters (collectively referred to herein as "filters") which take water from a natural source, for example a pond or river, become clogged over time and need to be cleaned. Many such filters are provided with a self-cleaning mechanism which periodically cleans the filter media.

Typically, in the filters of the prior art, the filter or screen medium closest to the filter outlet pipe accumulates particulates faster than the rest of the filter media. This reduces the surface area available for water flow through the filter media, which consequently increases the velocity of the water flowing through the remainder of the filter media. This may cause higher "head loss" (pressure drop) over the filter, which may increase the cost of operating an associated pump. Furthermore, particles which are embedded into the filter media at a high velocity may be more difficult to remove with a self-cleaning mechanism.

Some filters, for example filters which take water from sources which are habitats for living creatures (e.g. fish), may also be required to meet certain parameters regarding maximum allowable water velocity perpendicular to the filter media (e.g. to reduce the risk of harm to the wildlife). For example, in some cases the velocity of the water in a direction perpendicular to the filter media (e.g. the approach velocity) may be required to remain less than 0.1 m/s.

Some filters of the prior art may meet the required parameters when clean (e.g. immediately after a cleaning cycle), but may cause velocities above the required parameters when part of the filter media is blocked.

Use of such filters in lotic (flowing) water may also result in failure to meet design parameters regarding water velocities.

US 4 904 384 A discloses an apparatus housing a plurality of filter elements for separating contaminants from a fluid.

US 5 916 443 A discloses a filter apparatus for the uniform filtering of plastic melts

GB 1 520 003 A discloses a device for filtering a moving fluid.

### 3. OBJECT OF THE INVENTION

It is an object of the technology to provide a filter or screen comprising a filter media, which creates even flow rates through the filter media. Alternatively, it is an object of the technology to provide a filter or screen which creates lower head loss.

Alternatively, it is an object of the technology to overcome or ameliorate problems with filters or screens of the prior art, or to at least provide the public with a useful choice.

### 4. SUMMARY OF THE INVENTION

According to one aspect of the technology there is provided a filter or intake screen ("filter") for
removing particles from a fluid,
the filter comprising a filter media having a first side and an opposite second side, wherein the fluid flows, in use, from the first side to the second side,
a discharge port provided at a first end of the filter media on the second side of the filter media,
the filter characterised in that:
   a plurality of vanes are provided to the second side of the filter media and are configured to direct the flow of water from the filter media towards the discharge port, each vane having an upstream end adjacent the filter media, and a downstream end,
   wherein the flow of water from the vanes discharges into an interior volume which is in fluid communication with the discharge port, wherein a cross-sectional area of the interior volume decreases with increasing distance from the discharge port.

Preferably, the change in cross-sectional area of the interior volume is shaped such that the velocity of
the water flowing through the interior volume is substantially constant.

Preferably, the filter further comprises a flow guide provided on a downstream side of the vanes, the
flow guide defining a boundary of the interior volume, wherein a clearance distance between the downstream end of each respective vane and the flow guide decreases with increasing distance from the first end of the filter media.

Preferably, the clearance distance between the downstream end of each respective vane and the flow
guide is such that the velocity of the water flowing between each downstream end and the flow guide is substantially constant.

Preferably, the cross-sectional area between adjacent ones of the vanes decreases toward the
downstream end of the vanes to accelerate the flow between the upstream end and the downstream end of each vane.

Preferably, the filter comprises an outer housing on the first side of the filter media.

Preferably, a clearance distance between the outer housing and the first side of the filter media decreases with increasing distance from the outer housing inlet.

Preferably, the filter media is shaped as a surface of revolution, and the filter is configured to rotate the filter media about its central axis.

Preferably, the filter is provided with a plurality of nozzles configured to direct jets of water at the filter media to thereby remove filtered particulates from the filter media.

Preferably, the filter media comprises one or more of woven mesh, perforated plate, circumferential wedge-wire, longitudinal wedge-wire and multi layered sintered media.

Preferably, the change in clearance distance between the outer housing and the first side of the filter media is selected such that the mean fluid flow adjacent to the filter media has a velocity component parallel to the filter media which is greater than the velocity component which is normal to the filter media.

Preferably, the change in clearance distance between the outer housing and the first side of the filter media is selected such that the ratio of the velocity component parallel to the filter media to the velocity component which is normal to the filter media is substantially constant along the length of the filter media.

In examples, the filter is configured as a fish protection or fish exclusion screen.

Further aspects of the technology, which should be considered in all its novel aspects, will become apparent to those skilled in the art upon reading of the following description which provides at least one example of a practical application of the technology.

### 5. BRIEF DESCRIPTION OF THE DRAWINGS

One or more embodiments of the technology will be described below by way of example only, and without intending to be limiting, with reference to the following drawings, in which:
- Figure 1: is a diagrammatic cross-sectional side view of a filter according to one form of the technology;
- Figure 1a: is an enlarged view of the filter media and vanes of the filter of Figure 1;
- Figure 2: is a diagrammatic cross-sectional side view of a filter according to another form of the technology;
- Figure 3: is a diagrammatic side view of an exterior of a filter according to another form of the technology;
- Figure 3a: is a diagrammatic cross-sectional side view of the filter of Figure 3, with arrows showing indicative flow directions;
- Figure 3b: is a diagrammatic cross-sectional top view of the filter of Figure 3;
- Figure 4a: is an enlarged cross-sectional side view of a filter according to one form of the technology, showing a plurality of nozzles for cleaning the filter media;
- Figure 4b: is an enlarged cross-sectional end view of the filter of Figure 4a;
- Figure 5: is a diagrammatic cross-sectional side view of a filter according to another form of the technology;
- Figure 6: is a diagrammatic cross-sectional side view of a filter according to another form of the technology;
- Figure 7a: is a diagrammatic cross-sectional side view of a filter according to another form of the technology;
- Figure 7b: is a diagrammatic cross-sectional top view of the filter of Figure 7a; and
- Figure 8: is a diagrammatic cross-sectional side view of a filter according to another form of the technology;
- Figure 9: is a side view of a filter according to another form of the technology;
- Figure 10: is a diagrammatic cross-section view of the filter of Figure 9; and
- Figure 11: is another diagrammatic cross-section view of the filter of Figure 9 with a bypass flow shown.

### 6. BRIEF DESCRIPTION OF PREFERRED EMBODIMENTS OF THE INVENTION

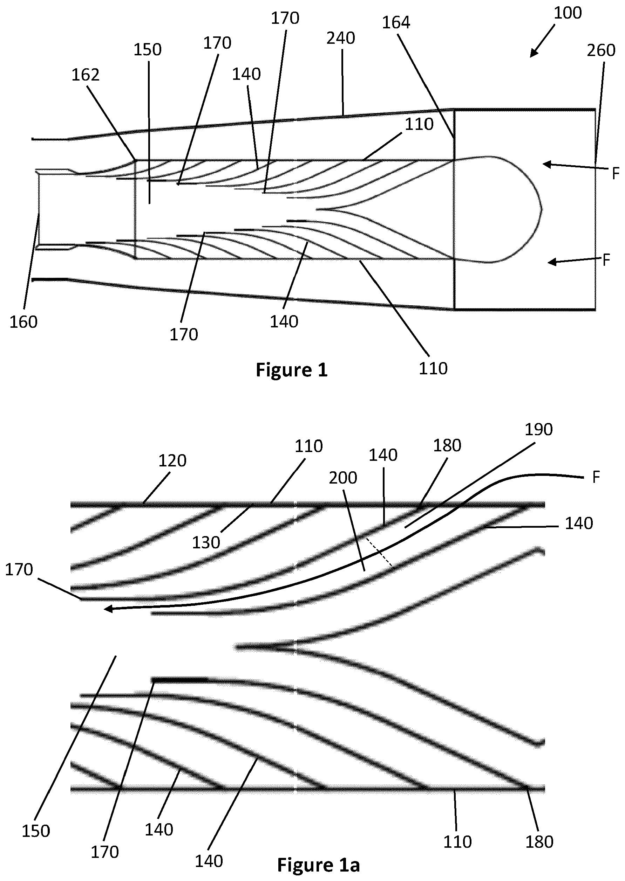

Referring first to Figure 1, a filter according to one form of the technology is referenced by arrow 100. In examples, the filter may be configured as a fish protection or fish exclusion screen.

The filter 100 comprises a filter or screen media 110. A range of filter/screen media 110 may be used, for example woven mesh, perforated plate, circumferential wedge-wire, longitudinal wedge-wire or multi layered sintered media. In the examples shown in the figures, the filter media 110 is configured as a relatively thin walled cylinder. In use, a fluid F (typically water) flows from a first side 120 of the filter media 110 to a second side 130, as shown in Figure 1a.

The filter 100 comprises a plurality of vanes 140 on the downstream side of the filter media 110, adjacent or in contact with the second side 130 of the filter media 110. Water flows from the vanes 140 into an interior volume 150 which is in fluid communication with a discharge port 160 provided at a first end 162 of the filter media 110. The vanes 140 are configured to direct the flow of water from the filter media 110 towards the discharge port 160, as is explained further below.

The cross-sectional area of the interior volume 150 decreases with increasing distance from the discharge port 160. Put another way, the cross-sectional area of the interior volume 150 increases in the direction of fluid flow towards the discharge port 160. This increase of cross-sectional area means that although additional flow is added to the stream of water moving towards the discharge port 160, the velocity of the water in the interior volume 150 remains substantially constant. This, in turn, means that the flow conditions at the downstream end 170 of each vane 140 are the same, and so the flow rate of water flowing between each pair of vanes 140 is substantially the same along the length of the filter media 110.

### 6.1. Flow through vanes

Referring next to Figure 1a, the flow through the vanes 140 is described in further detail.

The shape of the vanes 140, including the spacing between the vanes 140, is configured to increase the velocity of the water as it flows from the upstream end 180 of each vane to the downstream end 170. Water flows through the filter media 110 at a relatively low velocity due to the resistance caused by the filter media 110. Once the flow has passed through the filter media 110 it must be accelerated to the speed of the flow in the discharge port 160. This acceleration is done in a way that continues the uniformity of flow through the filter media 110. The vanes 140 split the flow and allow it to continue at this lower velocity for a short distance in a first zone 190. In the first zone 190, the cross-sectional area between the adjacent vanes 140 remains constant. The flow then flows through a second zone 200 in which it is steadily accelerated and its direction is changed such that it is flowing towards the discharge port 160. The cross-sectional area between adjacent vanes 140 decreases in the second zone 200 in order to cause the acceleration.

Once the flow has effectively reached the same velocity and direction as the bulk flow in the interior volume 150, it leaves the area between the vanes 140 and enters the interior volume 150. This ensures that the flow rate through the filter media 110 is substantially constant across the entire length of the filter media 110, rather than the flow rate being greater adjacent the discharge port 160 (when the filter media is clean), as is the case with many prior art filters.

The exact geometry of the vanes 140 may vary depending on the type of filter/screen media used and the velocity and angle of the water flow exiting the filter/screen media.

### 6.2. Flow guide

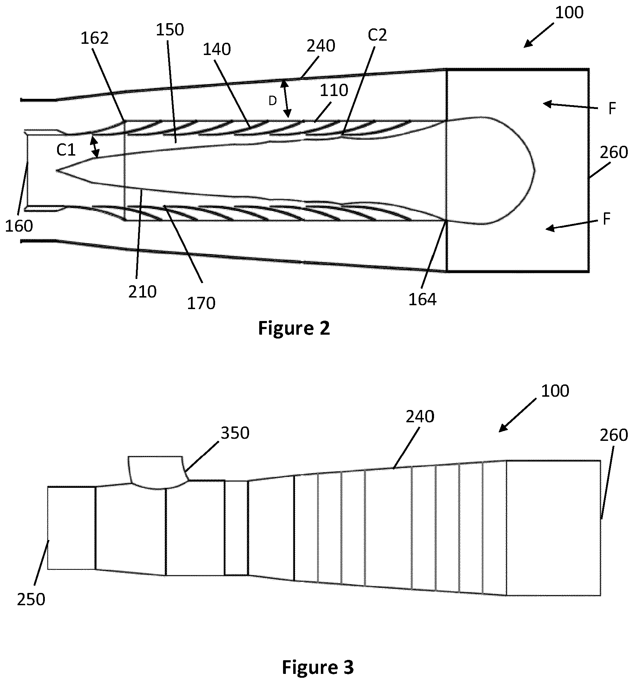

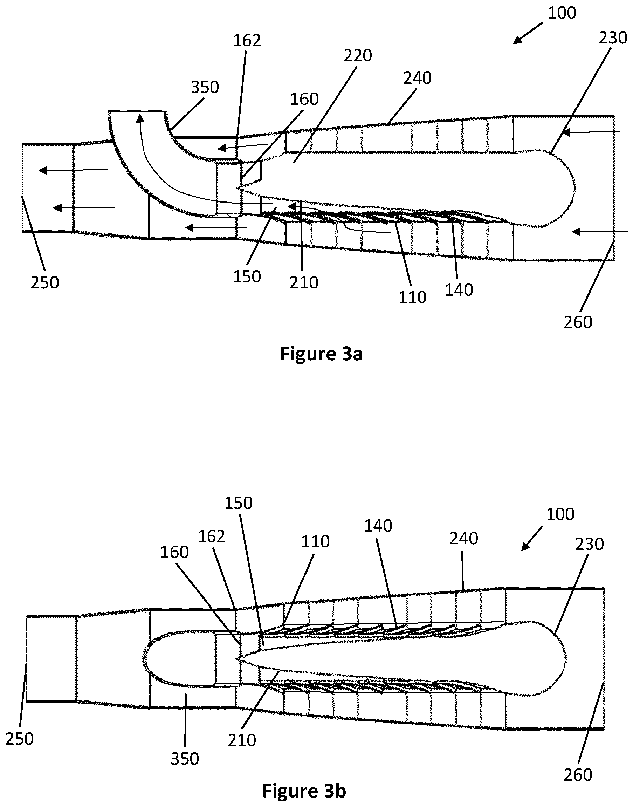

Referring next to Figures 2, 3a and 3b, in some examples a flow guide 210 is provided on a downstream side of the vanes 140. The flow guide 210 extends substantially longitudinally along the filter 100 and defines a boundary of the interior volume 150. The flow guide 210 may be generally lanceoloid (e.g. elongate teardrop) shaped in some examples. The flow guide 210 may be held in position relative to the filter media 110 by a plurality of radially extending supports 220.

In examples, the clearance space between the flow guide 210 and the downstream end 170 of each vane 140 decreases with increasing distance from the first end 162 of the filter media 110. That is, the clearance space C1 between the flow guide 210 and the downstream end 170 of the vane closest to the first end 162 of the filter media 110 (and the discharge port 160) is greater than the clearance space C2 between the flow guide 210 and the downstream end 170 of the vane which is furthest away from the first end 162, such that the cross-sectional area of the interior volume 150 increases in the direction of fluid flow towards the discharge port 160.

The vanes 140 and the flow guide 210 work together to ensure that substantially the same flow rate of fluid flows through the volume between each pair of vanes 140.

In examples, the upstream end 230 of the flow guide 210 may extend beyond the filter media 110 and may have a rounded shape to reduce turbulence in the water flowing over the filter media 110. The surface of the flow guide 210 may be undulating to control the flow between flow guide 210 and the end of the vanes 140, as best seen in Figure 2.

By providing a flow guide 210 as described, it may be possible to configure all of the vanes 140 to be substantially the same size and shape, thereby decreasing manufacturing costs. By contrast, the vanes 140 of the example shown in Figure 1 vary in size, from shortest at the first end 162 of the filter media 110 to longest at the second end 164, opposite the first end.

### 6.3. Outer housing - first embodiment

In some examples shown the filter 100 also comprises an outer housing 240. The outer housing 240 may have a bypass outlet 250 and an inlet 260, as seen in Figures 3a and 3b. A clearance distance D (see Figure 2) between the outer housing 240 and the filter media 110 may decrease in the direction of fluid flow, that is, with increasing distance from the inlet 260. In examples, this may ensure that the velocity of the flow parallel to the filter media (the "sweep velocity") is substantially constant along the length of the filter media. In examples, the overall, bulk or mean fluid flow (e.g. averaging variations caused by turbulence etc) adjacent to the filter media has a velocity component parallel to the filter media which is greater than the velocity component which is normal to the filter media (for example a ratio of around 5:1). In examples, the ratio of the velocity component parallel to the filter media to the velocity component which is normal to the filter media remains substantially constant along the length of the filter media.

In examples, the fluid in the space between the outer housing 240 and the filter media 110 flows in the same direction as the fluid flowing in the interior volume 150. In examples the inlet 260 is provided at an opposite end of the filter to the discharge port 160.

In some examples of the invention an outer housing 240 is not required.

### 6.4. Outer housing - second embodiment

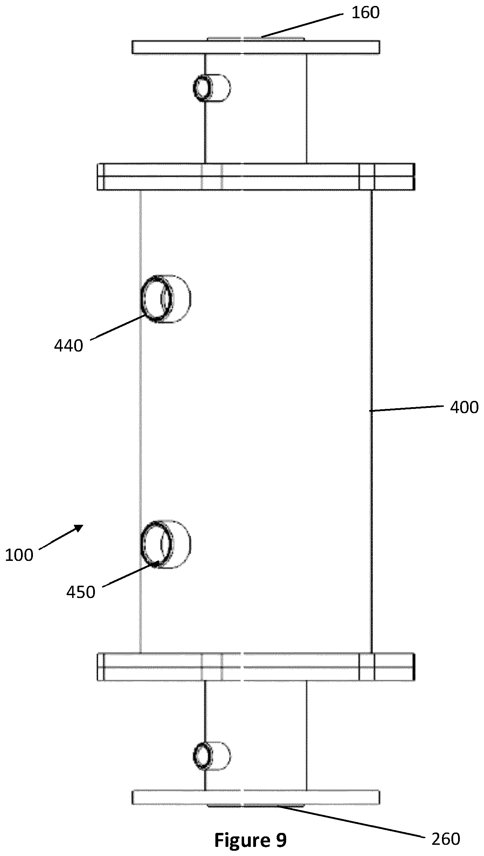

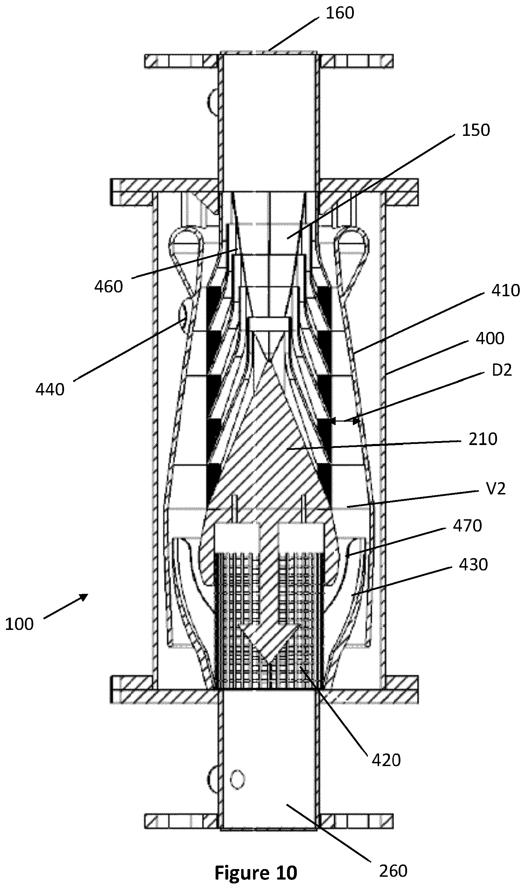

In another example, shown in Figures 9-11, an outer housing 400 may be provided which has a no bypass outlet. An outer flow guide 410 may be provided between the outer housing 400 and the filter media 110. A clearance distance D2 (see Figure 10) between the outer flow guide 410 and the filter media 110 may decrease in the direction of fluid flow, that is, with increasing distance from the inlet 260, in a similar form to the outer housing 240 described above in respect of the first embodiment. In examples, this may ensure that the velocity of the flow parallel to the filter media (the "sweep velocity") is substantially constant along the length of the filter media. In examples, the overall, bulk or mean fluid flow adjacent to the filter media has a velocity component parallel to the filter media (the approach velocity) which is greater than the velocity component which is normal to the filter media (the sweep velocity), for example in a ratio around 5:1. In examples, the ratio of the velocity component parallel to the filter media to the velocity component which is normal to the filter media remains substantially constant along the length of the filter media. However, in examples the distance between the outer housing 400 and the filter media 110 may remain substantially constant along the length of the filter 100. In examples, both the outer housing 400 and the filter media 110 are shaped as surfaces of revolution, e.g. cylinders.

Flow enters the volume between the outer flow guide 410 and the filter media 110 via a coarse screen 420. A diffuser formation 430 is provided between the coarse screen 420 and the volume V2 between the filter media 110 and the outer flow guide 410 which reduces the speed of the flow before entering the space V2 between the outer flow guide 410 and the filter media 110. In examples, the diffuser 430 is provided with flow straightening formations 470.

A portion of the flow through the inlet 260 does not pass through the filter media 110, but instead follows a bypass path B between the outer flow guide 410 and the outer housing 400. This bypass flow is drawn back into the space V2 between the outer flow guide 410 and the filter media 110 once more by the higher speed flow (relative to the bypass flow velocity) coming out of the diffuser formation 430. In examples, the filter is configured to reduce mixing of the bypass flow and the fresh inlet flow.

The bypass flow may carry dirt from the upstream side of the filter media 110. The outer housing 400 may be provided with an outlet 440 through which the flow within the housing 400 is drained periodically, in order to remove the dirt which has accumulated in the bypass flow. An instrument port 450 may also be provided in the outer housing 400. Instrument ports may also be provided at the inlet and/or outlet.

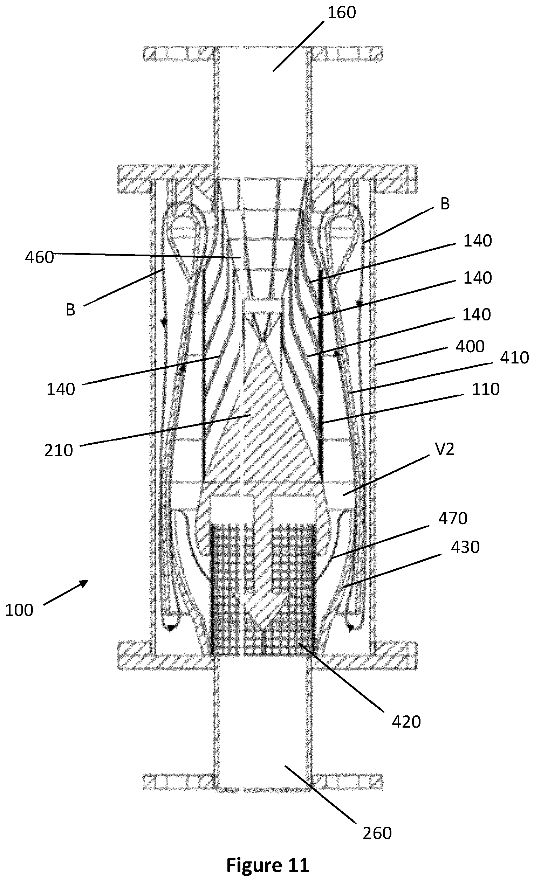

In the example shown in Figures 10 and 11, supports 460 are provided for the inner edge of each vane 140.

### 6.5. Filter media cleaning

In examples, the filter 100 may be provided with a cleaning mechanism for continuously or periodically cleaning (e.g. by backflushing, brushing etc) the filter media 110. However, in some forms of the technology the flow between the outer housing 240, 400 and the first side of the filter media 110 may draw the filtered particulates away from the filter media 110, meaning that no additional cleaning mechanism is required. The filter 100 may also be provided with a trash rack (not shown) upstream of the inlet 260, in order to prevent large objects from entering the filter 100.

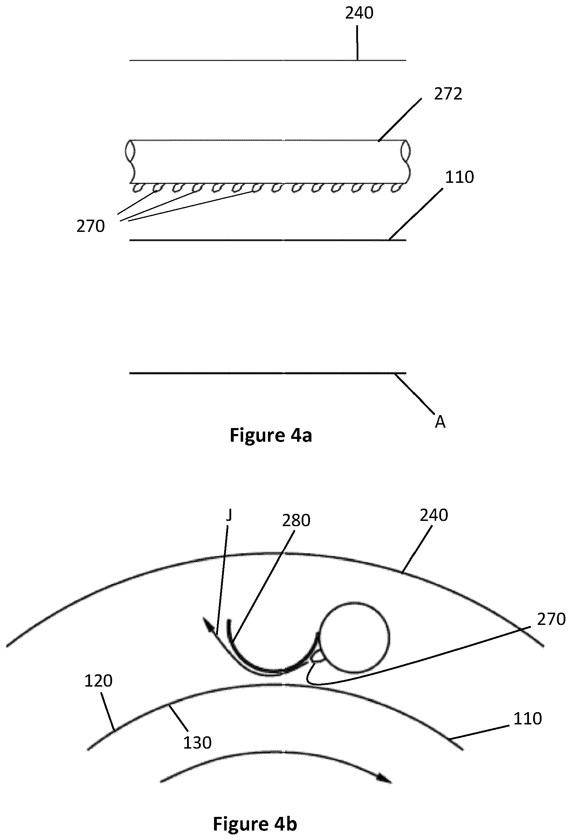

Referring next to Figures 4a and 4b, in examples the filter 100 may be provided with a plurality of nozzles 270 for cleaning the filter media 110. In examples, the nozzles 270 clean the filter media 110 continuously while the filter 100 is in use. In some examples the nozzles 270 are provided on the outside of the filter media 110 (e.g. the upstream side).

In some forms of the technology, a curved blade 280 may be provided adjacent the outlet of each nozzle. The blade 280 may be shaped to direct the jet of water J flowing from the nozzle in an arcuate path, first towards the filter media 110, then away from the filter media 110. The water jet J from each nozzle 270 may entrain debris from the surface of the filter media 110, thereby cleaning it. In examples the water jet J remains attached to the surface of the blade 280 due to the Coanda effect.

In examples, the nozzles 270 are arranged in a single row, for example, connected to a common manifold 272.

In other examples (not shown) a cleaning mechanism (e.g. nozzles, a brush etc) may be provided on an internal side of the filter media, e.g. between the filter media and vanes. In such examples the vanes may be spaced apart from the filter media to allow space for the cleaning mechanism.

The filter media 110 may be arranged to rotate about its central axis A (e.g by means of a water turbine, an electric gearmotor or hydraulic motor or similar) such that a single row of nozzles (e.g nozzles 270), a brush, or any other suitable cleaning mechanism, can clean the entire filter media 110. In such examples, the filter media 110 may be configured as a surface of revolution, such that distance between the cleaning mechanism (e.g. nozzles 270) and the filter media 110 remains constant over the entire revolution of the filter media 110.

In other examples of the invention (not shown) which are configured for use with pre-filtered or pre-screened water, the outer housing 240, inlet 260 and bypass outlet 250 may be configured to generate a smaller bypass flow than would be used for examples which take water directly from a lake, river or pond. In such examples, the bypass flow may be carried through to a secondary filter. The secondary filter may be periodically backflushed and the dirty water discharged from the system.

### 6.6. Bypass flow

In examples (not shown) the bypass outlet 250 (if provided) may be fluidly connected to a bypass conduit which has an outlet which is at a lower pressure than the pressure at the housing inlet 260, in order to drive flow through the bypass outlet 250. In examples, the bypass conduit outlet may be provided downstream of a weir or similar.

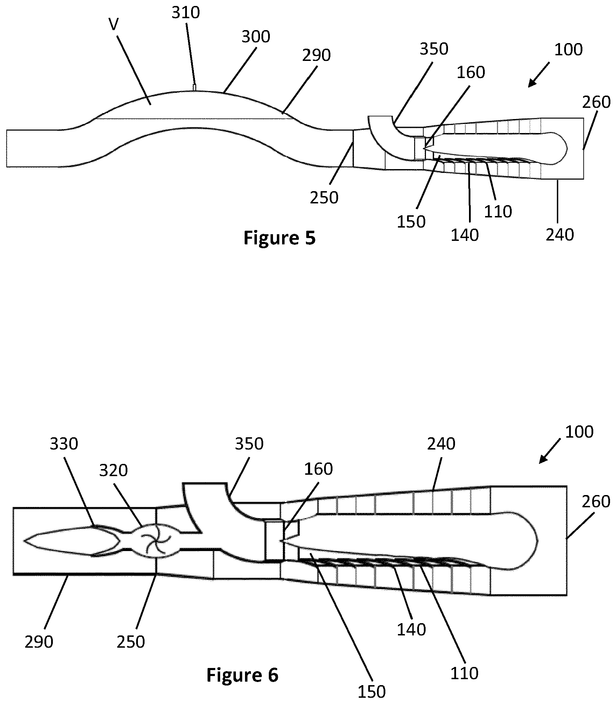

Referring next to Figure 5, in examples the bypass outlet 250 may be connected to a bypass conduit 290 which has a portion 300 forming an inverted U shape. The top of the inverted U may be provided with a port 310. By adding or removing air through the port 310, and thereby adjusting the volume of air V trapped at the top of the inverted U shape portion 300, the area available for water flow may be adjusted and therefore the flow rate through the bypass can be controlled.

Referring next to Figure 6, in another example a pump may pump water into a nozzle arrangement 330 provided in the bypass flow. This may assist in driving water through the bypass, if needed. The pump may receive filtered water from the interior volume 150, or from an alternative source.

As shown in Figure 3a, in one example the discharge port 160 may be connected to an outlet conduit 350 which is directed through the side of the outer housing 240.

### 6.7. Other configurations

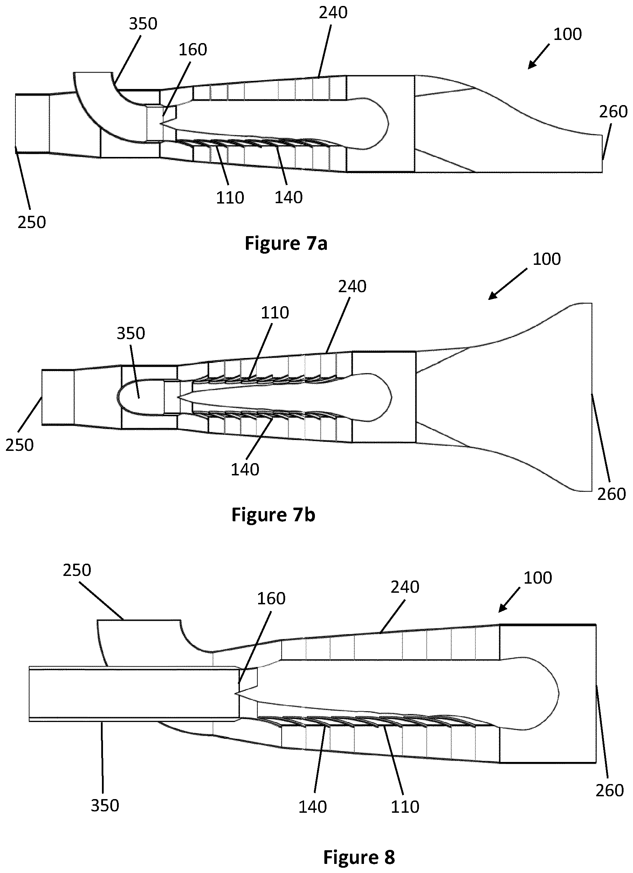

While the examples shown above show the inlet 260 to the outer housing 240 as circular, in other examples a non-circular inlet 260 may be provided, as show in Figures 7a and 7b. In this example the inlet 260 is substantially rectangular.

Referring next to Figure 8, in another example the position of the bypass outlet 250 and the outlet conduit 350 are reversed.

It should be noted that various changes and modifications to the presently preferred embodiments described herein will be apparent to those skilled in the art. Such changes and modifications may be made without departing from the scope of the claims.

## Claims

1. A filter or intake screen ("filter") (100) for removing particles from a fluid,
the filter (100) comprising a filter media (110) having a first side (120) and an opposite second side (130), wherein the fluid (F) flows, in use, from the first side (120) to the second side (130),
a discharge port (160) provided at a first end (162) of the filter media (110) on the second side of the filter media (110),
the filter **characterised in that**:
a plurality of vanes (140) are provided to the second side (130) of the filter media and are configured to direct the flow of water from the filter media (110) towards the discharge port (160), each vane (140) having an upstream end (180) adjacent the filter media (110) and a downstream end (170),
wherein the flow of water from the vanes (140) discharges into an interior volume (150) which is in fluid communication with the discharge port (160), wherein a cross-sectional area of the interior volume (150) decreases with increasing distance from the discharge port (160).

2. The filter of claim 1, wherein the change in cross-sectional area of the interior volume (150) is such that the velocity of the water flowing through the interior volume (150) is substantially constant.

3. The filter of claim 1 or 2, wherein the filter further comprises a flow guide (210) provided on a downstream side of the vanes (140), the flow guide (210) defining a boundary of the interior volume (150), wherein a clearance distance (C1) between the downstream end of each respective vane (140) and the flow guide (210) decreases with increasing distance from the first end (162) of the filter media.

4. The filter of claim 3, wherein the clearance distance (C1) between the downstream end of each respective vane (140) and the flow guide (210) is such that the velocity of the water flowing between each downstream end and the flow guide (210) is substantially constant.

5. The filter of any one of the preceding claims, wherein the cross-sectional area between adjacent ones of the vanes (140) decreases toward the downstream end (170) of the vanes (140) to accelerate the flow between the upstream end (180) and the downstream end (170) of each vane (140).

6. The filter of any one of the preceding claims, further comprising an outer housing (240) on the first side of the filter media (110).

7. The filter of claim 6, wherein a clearance distance (D) between the outer housing (240) and the first side of the filter media (110) decreases with increasing distance from the outer housing inlet (260).

8. The filter of any one of the preceding claims, wherein the filter media (110) is shaped as a surface of revolution, and the filter (100) is configured to rotate the filter media (110) about its central axis (A).

9. The filter of claim 8, wherein the filter (100) is provided with a plurality of nozzles (270) configured to direct jets of water at the filter media (110) to thereby remove filtered particulates from the filter media (110).

10. The filter of any one of the preceding claims, wherein the filter media (110) comprises one or more of woven mesh, perforated plate, circumferential wedge-wire, longitudinal wedge-wire and multi layered sintered media.

11. The filter of claim 7 wherein the change in clearance distance (D) between the outer housing (240) and the first side (120) of the filter media (110) is selected such that the mean fluid flow adjacent to the filter media (110) has a velocity component parallel to the filter media (110) which is greater than the velocity component which is normal to the filter media (110).

12. The filter of claim 11 wherein the change in clearance distance (D) between the outer housing (240) and the first side (120) of the filter media (110) is selected such that the ratio of the velocity component parallel to the filter media (110) to the velocity component which is normal to the filter media (110) is substantially constant along the length of the filter media (110).

13. The filter of any one of the preceding claims configured as a fish screen.

## Patentansprüche

1. Filter oder Ansaugsieb ("Filter") (100) zum Entfernen von Partikeln aus einem Fluid, wobei der Filter (100) ein Filtermedium (110) mit einer ersten Seite (120) und einer gegenüberliegenden zweiten Seite (130) umfasst, wobei das Fluid (F) im Gebrauch von der ersten Seite (120) zu der zweiten Seite (130) strömt, eine Auslassöffnung (160), die an einem ersten Ende (162) des Filtermediums (110) auf der zweiten Seite des Filtermediums (110) bereitgestellt ist, wobei der Filter **dadurch gekennzeichnet ist, dass**:
eine Vielzahl von Lamellen (140) an der zweiten Seite (130) des Filtermediums bereitgestellt sind und dazu konfiguriert sind, den Wasserstrom von dem Filtermedium (110) zu der Auslassöffnung (160) hin zu lenken, wobei jede Lamelle (140) ein stromaufwärtiges Ende (180) benachbart zu dem Filtermedium (110) und ein stromabwärtiges Ende (170) aufweist,
wobei der Wasserstrom aus den Lamellen (140) in ein Innenvolumen (150) mündet, das in Fluidverbindung mit der Auslassöffnung (160) steht, wobei eine Querschnittsfläche des Innenvolumens (150) mit zunehmendem Abstand von der Auslassöffnung (160) abnimmt.

2. Filter nach Anspruch 1, wobei die Änderung der Querschnittsfläche des Innenvolumens (150) derart ist, dass die Geschwindigkeit des Wassers, das durch das Innenvolumen (150) strömt, im Wesentlichen konstant ist.

3. Filter nach Anspruch 1 oder 2, wobei der Filter ferner eine Strömungsführung (210) umfasst, die auf einer stromabwärtigen Seite der Lamellen (140) bereitgestellt ist, wobei die Strömungsführung (210) eine Grenze des Innenvolumens (150) definiert, wobei ein lichter Abstand (C1) zwischen dem stromabwärtigen Ende jeder jeweiligen Lamelle (140) und der Strömungsführung (210) mit zunehmendem Abstand von dem ersten Ende (162) des Filtermediums abnimmt.

4. Filter nach Anspruch 3, wobei der lichte Abstand (C1) zwischen dem stromabwärtigen Ende jeder jeweiligen Lamelle (140) und der Strömungsführung (210) derart ist, dass die Geschwindigkeit des Wassers, das zwischen jedem stromabwärtigen Ende und der Strömungsführung (210) strömt, im Wesentlichen konstant ist.

5. Filter nach einem der vorhergehenden Ansprüche, wobei die Querschnittsfläche zwischen benachbarten Lamellen (140) zum stromabwärtigen Ende (170) der Lamellen (140) hin abnimmt, um
die Strömung zwischen dem stromaufwärtigen Ende (180) und dem stromabwärtigen Ende (170) jeder Lamelle (140) zu beschleunigen.

6. Filter nach einem der vorhergehenden Ansprüche, ferner umfassend ein Außengehäuse (240) auf der ersten Seite des Filtermediums (110).

7. Filter nach Anspruch 6, wobei ein lichter Abstand (D) zwischen dem Außengehäuse (240) und der ersten Seite des Filtermediums (110) mit zunehmendem Abstand von dem Außengehäuseeinlass (260) abnimmt.

8. Filter nach einem der vorhergehenden Ansprüche, wobei das Filtermedium (110) als eine Rotationsfläche geformt ist und der Filter (100) dazu konfiguriert ist, das Filtermedium (110) um seine Mittelachse (A) zu drehen.

9. Filter nach Anspruch 8, wobei der Filter (100) mit einer Vielzahl von Düsen (270) versehen ist, die dazu konfiguriert sind, Wasserstrahlen auf das Filtermedium (110) zu lenken, um dadurch gefilterte Partikel von dem Filtermedium (110) zu entfernen.

10. Filter nach einem der vorhergehenden Ansprüche, wobei das Filtermedium (110) eines oder mehrere von Drahtgewebe, perforierter Platte, Umfangsspaltsieb, Längsspaltsieb und mehrschichtigen gesinterten Medien umfasst.

11. Filter nach Anspruch 7, wobei die Änderung des lichten Abstands (D) zwischen dem Außengehäuse (240) und der ersten Seite (120) des Filtermediums (110) so ausgewählt ist, dass der mittlere Fluidstrom neben dem Filtermedium (110) eine Geschwindigkeitskomponente parallel zu dem Filtermedium (110) aufweist, die größer als die Geschwindigkeitskomponente ist, die normal zu dem Filtermedium (110) ist.

12. Filter nach Anspruch 11, wobei die Änderung des lichten Abstands (D) zwischen dem Außengehäuse (240) und der ersten Seite (120) des Filtermediums (110) so ausgewählt ist, dass das Verhältnis der Geschwindigkeitskomponente parallel zu dem Filtermedium (110) zu der Geschwindigkeitskomponente, die normal zu dem Filtermedium (110) ist, entlang der Länge des Filtermediums (110) im Wesentlichen konstant ist.

13. Filter nach einem der vorhergehenden Ansprüche, der als Fischsieb konfiguriert ist.

## Revendications

1. Filtre ou tamis d'admission (« filtre ») (100) destiné à éliminer les particules d'un fluide, le filtre (100) comprenant un milieu filtrant (110) comportant un premier côté (120) et un second côté opposé (130), ledit fluide (F) s'écoulant,lors de l'utilisation, du premier côté (120) au second côté (130), un orifice de décharge (160) prévu au niveau d'une première extrémité (162) du milieu filtrant (110) sur le second côté du milieu filtrant (110), le filtre étant **caractérisé en ce que** :
une pluralité d'aubes (140) sont prévues sur le second côté (130) du milieu filtrant et sont conçues pour diriger le flux d'eau en provenance du milieu filtrant (110) vers l'orifice de décharge (160), chaque aube (140) possédant une extrémité en amont (180) adjacente au milieu filtrant (110) et une extrémité en aval (170),
ledit flux d'eau provenant des aubes (140) se déchargeant dans un volume intérieur (150) qui est en communication fluidique avec l'orifice de décharge (160), une surface de section transversale du volume intérieur (150) diminuant avec l'augmentation de la distance à partir de l'orifice de décharge (160).

2. Filtre de la revendication 1, ledit changement d'aire de section transversale du volume intérieur (150) étant de sorte que la vitesse de l'eau s'écoulant à travers le volume intérieur (150) soit sensiblement constante.

3. Filtre de la revendication 1 ou 2, ledit filtre comprenant en outre un guide d'écoulement (210) prévu sur un côté en aval des aubes (140), le guide d'écoulement (210) définissant une limite du volume intérieur (150), une distance de dégagement (C1) entre l'extrémité en aval de chaque aube respective (140) et le guide d'écoulement (210) diminuant avec l'augmentation de la distance à partir de la première extrémité (162) du milieu filtrant.

4. Filtre de la revendication 3, ladite distance de dégagement (C1) entre l'extrémité en aval de chaque aube respective (140) et le guide d'écoulement (210) étant de sorte que la vitesse de l'eau s'écoulant entre chaque extrémité en aval et le guide d'écoulement (210) soit sensiblement constante.

5. Filtre de l'une quelconque des revendications précédentes, ladite surface de section transversale entre les aubes adjacentes des aubes (140) diminuant vers l'extrémité en aval (170) des aubes (140) pour
accélérer l'écoulement entre l'extrémité en amont (180) et l'extrémité en aval (170) de chaque aube (140).

6. Filtre d'une quelconque des revendications précédentes, comprenant en outre un boîtier externe (240) sur le premier côté du milieu filtrant (110).

7. Filtre de la revendication 6, une distance de dégagement (D) entre le boîtier externe (240) et le premier côté du milieu filtrant (110) diminuant avec l'augmentation de la distance à partir de l'entrée du boîtier externe (260).

8. Filtre de l'une quelconque des revendications précédentes, ledit milieu filtrant (110) étant façonné sous la forme d'une surface de révolution, et ledit filtre (100) étant conçu pour faire tourner le milieu filtrant (110) autour de son axe central (A).

9. Filtre de la revendication 8, ledit filtre (100) étant doté d'une pluralité de buses (270) conçues pour diriger des jets d'eau au niveau du milieu filtrant (110) afin d'éliminer ainsi des particules filtrées du milieu filtrant (110).

10. Filtre de l'une quelconque des revendications précédentes, ledit milieu filtrant (110) comprenant un ou plusieurs d'une maille tissée, d'une plaque perforée, d'un fil profilé circonférentiel, d'un fil profilé longitudinal et d'un milieu fritté multicouche.

11. Filtre de la revendication 7, ledit changement de distance de dégagement (D) entre le boîtier externe (240) et le premier côté (120) du milieu filtrant (110) étant sélectionné de sorte que l'écoulement de fluide moyen adjacent au milieu filtrant (110) possède une composante de vitesse parallèle au milieu filtrant (110) qui est supérieure à la composante de vitesse qui est normale au milieu filtrant (110).

12. Filtre de la revendication 11, ledit changement de distance de dégagement (D) entre le boîtier externe (240) et le premier côté (120) du milieu filtrant (110) étant sélectionné de sorte que le rapport de la composante de vitesse parallèle au milieu filtrant (110) sur la composante de vitesse qui est normale au milieu filtrant (110) soit sensiblement constant le long de la longueur du milieu filtrant (110).

13. Filtre de l'une quelconque des revendications précédentes conçu en tant que tamis à poisson.
